Europäisches Patentamt

European Patent Office

Office européen des brevets

(11) Veröffentlichungsnummer: **0 278 108**
**B1**

(12) **EUROPÄISCHE PATENTSCHRIFT**

(45) Veröffentlichungstag der Patentschrift:
16.08.89

(21) Anmeldenummer: 87119099.7

(22) Anmeldetag: 18.07.84

(60) Veröffentlichungsnummer der früheren Anmeldung
nach Art. 76 EPÜ: 0168514

(51) Int. Cl.⁴: **G01M 1/22**, G01M 1/08

(54) Verfahren und Vorrichtung zum Stillsetzen eines rotierenden Körpers.

(43) Veröffentlichungstag der Anmeldung:
**17.08.88 Patentblatt 88/33**

(45) Bekanntmachung des Hinweises auf die Patenterteilung:
**16.08.89 Patentblatt 89/33**

(84) Benannte Vertragsstaaten:
**DE FR GB IT**

(56) Entgegenhaltungen:
**DE-A- 1 648 336**
**FR-A- 2 264 274**

(73) Patentinhaber: **Schenck Auto-Service-Geräte GmbH,
Landwehrstrasse 63 Postfach 4129,
D-6100 Darmstadt(DE)**

(72) Erfinder: **Maus, Otfrid, Im Fiedlersee 34,
D-6100 Darmstadt(DE)**

(74) Vertreter: **Dallhammer, Herbert, Dipl.-Ing., c/o
Schenck-Auto-Service-Geräte GmbH Patentabteilung
Postfach 4129 Landwehrstrasse 63,
D-6100 Darmstadt(DE)**

## Beschreibung

Die Erfindung betrifft ein Verfahren zum Stillsetzen eines von einem Antrieb in Drehung versetzten rotierenden Körpers am Ende eines Arbeitszyklus, insbesondere eines in einer Auswuchtmaschine eingelagerten auf Unwucht zu untersuchenden rotierenden Körpers.

Durch die DE-AS 10 82 066 ist ein Verfahren zum Auswuchten schnell laufender Maschinenläufer, insbesondere von Dampfturbinen und Turbogeneratoren, bei dem die Läufer vor dem Wuchtvorgang durch einen Antrieb hochgefahren und vor dem Auswuchten von dem Antrieb abgekuppelt werden, bekannt geworden, das sich dadurch auszeichnet, daß der Antrieb für den Wuchtkörper nach beendetem Auswuchtvorgang genau auf die Drehzahl des freilaufenden Wuchtkörpers eingesteuert wird und daß bei genauem Gleichlauf des Wuchtkörpers und des Antriebs der Wuchtvorrichtung die Kupplungsbolzen der mit dem Antrieb verbundenen Kupplungseinrichtung wieder in Eingriff mit der auf dem freilaufenden Läufer befindlichen Kupplungsscheibe gebracht werden, worauf der Läufer durch den nunmehr als Generator arbeitenden Antriebsmotor in kurzer Zeit stillgesetzt wird. Ein derartiges Verfahren ist nicht geeignet, einen zu untersuchenden rotierenden Körper an einer bestimmten Stelle seines Umfangs bezogen auf eine Stelle der Auswuchtmaschine zum Stillstand zu bringen. Es muß hierbei nach dem Stillstand des rotierenden Körpers durch einen weiteren Eindrehvorgang der zu untersuchende rotierende Körper in eine während der Messung als Unwuchtwinkellage festgestellte Winkelposition eingedreht werden, um anschließend an dieser Stelle beispielsweise durch Materialabtragung zur Beseitigung einer Unwucht bearbeitet zu werden. Derartige zusätzliche Endrehvorgänge sind zeitaufwendig und führen beispielsweise auch bei Einbau einer Auswuchtmaschine in einen Fertigungsstrang zu beachtlichen Verzögerungen, insbesondere dann, wenn die zu bearbeitende Stelle des rotierenden Körpers vor ein an der Auswuchtmaschine befestigtes Werkzeug eingedreht werden muß, welches nicht an der für die Unwuchtermittlung angenommenen Nullstelle angeordnet ist. In einem solchen Falle ist es im allgemeinen dann erforderlich, den auszugleichenden rotierenden Körper nach dem Stillsetzen zunächst in die Lage einzudrehen, die dem für die Unwucht gewählten Koordinatensystem entspricht und anschließend in einem zweiten Eindrehvorgang die zu bearbeitende Stelle vor das Ausgleichswerkzeug zu bringen. Es ist offensichtlich, daß durch einen derartigen Eindrehvorgang die Taktzeit des Fertigungsstranges im wesentlichen beeinflußt wird.

Durch die DE-AS 12 48 335 ist ein weiteres Verfahren zum Auswuchten von Rotoren im Auslauf bekannt geworden, bei welchem der Antriebsmotor nach dem Hochlaufen vom Wuchtkörper abgekuppelt und nach der Unwuchtmessung ein zweites Mal hochgefahren wird, um bei gleicher Drehzahl von Motor und Wuchtkörper erneut mit dem Wuchtkörper gekuppelt zu werden, damit der Wuchtkörper durch den Motor abgebremst werden kann, welches sich dadurch auszeichnet, daß die Energiezufuhr zum Antriebsmotor beim zweiten Hochlauf abgeschaltet wird, sobald er die Drehzahl des Wuchtkörpers erreicht. Auch dieses Verfahren zum Stillsetzen eines rotierenden Körpers ist nicht geeignet, den Zeitaufwand für das Stillsetzen eines rotierenden Körpers an einer vorgegebenen Stelle, wie oben näher definiert, zu verringern.

Durch die EP-A-074 416 ist ein Verfahren zum Übertragen einer gemessenen Unwuchtwinkellage auf eine Ausgleichs ebene eines zu untersuchenden Rotors, wobei kein rotierendes Teil der Auswuchtmaschine mit dem zu untersuchenden Rotor synchron umläuft (gelenkwellenlose Auswuchtmaschine) und eine Vorrichtung hierzu bekannt geworden, bei der stets eine Reihe rotierender Körper gleichen Trägheitsmomentes auf in diesen Körpern vorhandene Unwuchten untersucht werden. Hierbei wird bei der Messung durch einen mit dem Rotor verbundenen Impulsgeber eine Impulsfolge erzeugt, mithilfe der die Unwuchtlage der Unwucht des Rotors festgestellt wird und nach Feststellen der Werte der Rotor entsprechend diesen Werten abgebremst wird. Eine Bestimmung von Beschleunigungswerten der zu untersuchenden Rotoren findet nicht statt.

Durch die in den Patent Abstracts of Japan Band 7 Nr. 249 (Seite 234) (1394), 5.11.83 erschienene Veröffentlichung wird ein Selbstpositionierungssystem für eine Unwuchtlage offenbart, bei der in Abhängigkeit der Übereinstimmung der Zahlenwerte eines voreingestellten Zählers mit den Zahlenwerten, die bei der Beschleunigung eines zu messenden Körpers erreicht werden, ein Antriebsmotor einen Bremslauf beginnt. Zufolge Fehlens einer Information über das Ende der Beschleunigungszeit folgt eine willkürliche Übereinstimmung der Zahlenwerte; dies führt dann zwangsläufig zu einer Falscheindrehung dergestalt, daß der Körper nicht an der Stelle seines Ausgleichs zum Stillstand kommt.

Im Maschinenbau ist es jedoch häufig notwendig, umlaufende rotierende Körper verschiedenen Trägheitsmoments so abzubremsen, daß sie in einer bestimmten gewünschten Endposition zum Stillstand kommen. So besteht beispielsweise bei Drehmaschinen der Wunsch, das Spannfutter für den aufzunehmenden rotierbaren Körper an einer bestimmten Position zum Öffnen anhalten zu lassen. Darüberhinaus gilt für den auf einer Auswuchtmaschine untersuchten Körper, bei dem die durch die Unwuchtmessung ermittelte Korrekturstelle, die je nach Unwuchtlage beliebig am Umfang des Rotors liegen kann, genau vor dem Ausgleichswerkzeug ohne die oben genannten zusätzlichen Eindrehvorgänge nach dem Meßlauf direkt vor dem Ausgleichswerkzeug anhalten soll. Als Antrieb für die oben genannten Werkzeugmaschinen und Auswuchtmaschinen können je nach Bedarfsfall Elektromotor, Turbine oder Preßluft, die direkt am rotierbaren Körper angreift, verwendet werden, auch kann bei einem Antrieb durch Elektromotor oder Turbinen eine Kupplung direkt mit dem rotierenden Körper vorhanden sein, oder eine Verbindung mit diesem über Getriebe oder Antriebsriemen vorgesehen werden und es kann auch der Antrieb mit einem Schaft verbunden sein, an dessen einem Ende das Spannfutter einer Drehmaschine oder die Aufnahme für ein Kraftfahrzeugrad angeordnet ist und dessen anderes Ende eine feste mit dem Schaft verbundene Winkelbezugsscheibe trägt. Ausgehend hiervon liegt der Erfindung die Aufgabe zugrunde, ein Verfahren zum Stillsetzen eines rotierenden Körpers vorzuschlagen, bei dem die während eines Arbeitszyklus erst ermittelte, zu bearbeitende Stelle in vorgegebener Lage zum Stillstand kommt. Diese Aufgabe wird durch die kennzeichnenden Merkmale des Anspruchs 1 gelöst. Die wesentliche erfinderische Erkenntnis besteht darin, daß zum gezielten Stillsetzen des rotierenden Körpers die bei seiner Beschleunigung im gleichen Arbeitsgang gewonnen Meßwerte verwendet werden. Auch in der Beschleunigungsphase sind die spezifischen Merkmale des rotierenden Körpers, nämlich sein Massenträgheitsmoment und seine Reibung und die Antriebseinflüsse vom Antrieb her einschließlich Lagerung ein Kriterium für die nach einem bestimmten zurückgelegten Hochlaufweg eines Punktes der Oberfläche des rotierenden Körpers relativ zu einem Festpunkt vom Stillstand aus zu erreichende Meßdrehzahl.

Das kennzeichnende Merkmal des Anspruchs 2 lehrt, die in der Beschleunigungsphase gewonnenen und gespeicherten Kriterien bis zur Erreichung der Meßdrehzahl als Vorhalt für das zielgerechte Anhalten des rotierenden Körpers an der Ausgleichsstelle zu verwenden.

Das kennzeichnende Merkmal des Anspruchs 3 lehrt, nur während eines vorbestimmten Zeitraums innerhalb der Beschleunigungsphase, die die Beschleunigung charakterisierenden Merkmale aufzunehmen und diese Werte dann versehen mit einer vorgegebenen Konstanten für das Anhalten des rotierenden Körpers zu verwenden. So hat es sich herausgestellt, nur den im wesentlichen linear verlaufenden Teil der Beschleunigungsphase also beispielsweise nur von etwa 10 bis etwa 70 % der Enddrehzahl aufzunehmen und die restlichen beiden Bereiche durch eine Konstante zu bewerten, die den asymptotischen Einlauf der beschleunigten rotierenden Körpers in die Nenndrehzahl und den im wesentlichen vom nicht immer gleichen Losbrechmoment bestimmten ersten Bereich der Beschleunigung ersetzt.

Durch Aufnahe der charakteristischen Daten, Massenträgheitsmoment, Reibung und Antreibseinflüsse des einzelnen rotierenden Körpers bei seiner Beschleunigung während jedes Arbeitszyklus auf die Meßdrehzahl machen das erfinderische Verfahren unabhängig von empirischen Vorgaben für das Stillsetzen eines rotierenden Körpers an einer vorbestimmten Stelle. Wird beispielsweise ein beschaufelter Rotor einmal unter normalen atmosphärischen Bedingungen und zum anderen mal im Vakuum beschleunigt, so ist es nicht erforderlich, vorher empirisch festzulegen, welchen Einfluß etwa die Luftreibung der Schaufeln auf den Bremsvorgang hat; mit dem erfinderischen Verfahren reicht es aus, während der Beschleunigungsphase eine Beschleunigungskennlinie aufzunehmen, diese zu speichern und dann beim Verzögern des Rotors mit dem Abbremsvorgang an einem bestimmten Umfangsabstand vor dem gewünschten Stillstand des rotierenden Körpers zu beginnen, der sich aus der gespeicherten Beschleunigungskennlinie herleitet.

In Anspruch 4 wird eine Vorrichtung zur Durchführung des Verfahrens nach den Ansprüchen 1, 2 und/oder 3 unter Schutz gestellt.

Der in Anspruch 5 unter Schutz gestellte Taktgenerator kann zur Speicherung der nach dem Verfahrensanspruch 1 gewonnenen Werte herangezogen werden und nach der Unwuchtmeß- oder Arbeitsphase als Steuergerät zum gezielten Anhalten verwendet werden, wobei der Beginn der Bremsphase entsprechend den ausgezählten Werten rückwärts gerechnet vor der gewünschten Halteposition des rotierenden Körpers liegt.

Die kennzeichnenden Merkmale des Anspruchs 6 offenbaren eine Vorrichtung, die es gestattet, auch bei Aufnahmen nur eines Teilbereichs der Beschleunigungsphase den Beginn der Bremsphase rechtzeitig vor dem Anhaltepunkt zu legen, wobei aus dem Teilbereich der Beschleunigung der gesamte Verzögerungsbereich bis zum Stillstand hergeleitet wird.

Anhand einer Zeichnung wird die Erfindung näher erläutert.

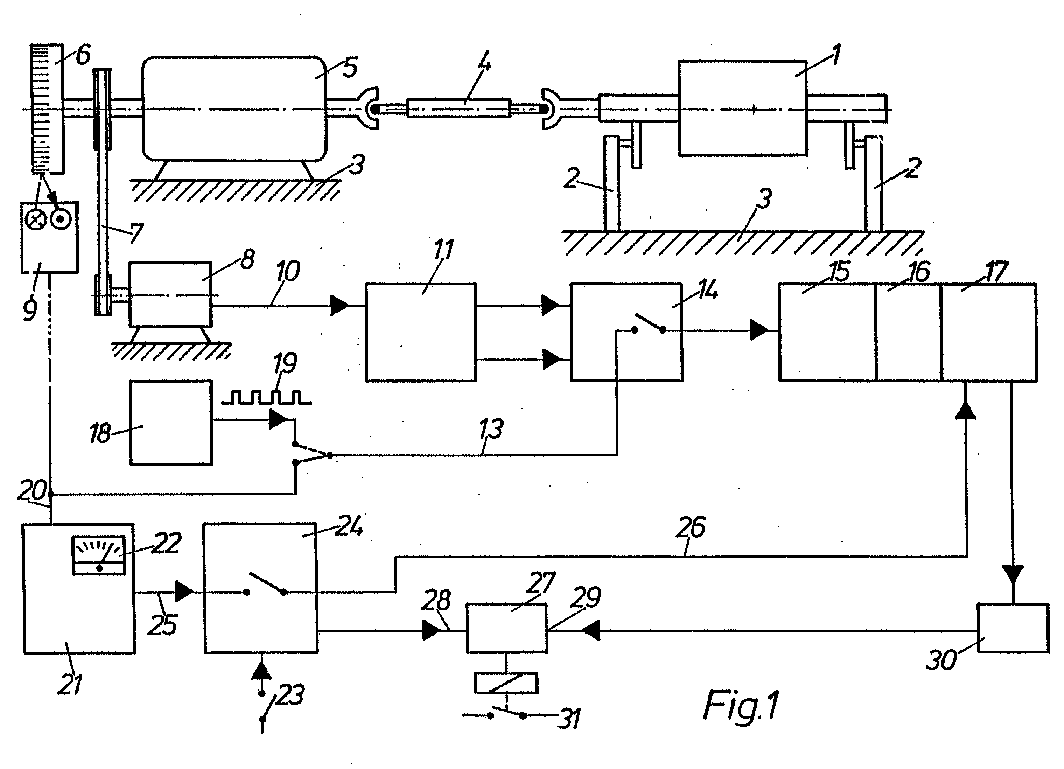

In der Figur ist schematisch eine Auswuchtmaschine mit darin gelagertem rotierendem Körper und ein diesen antreibender Motor dargestellt sowie in einem Blockschaltbild eine elektrische Steuerschaltung zum Stillsetzen des rotierenden Körpers in einer bestimmten Winkellage.

Ein zu untersuchender rotierender Körper 1 wird in einer schwingfähigen Lagerung 2, welche auf einem Fundament 3 angeordnet ist, über eine Kupplung 4, die als Gelenkwelle ausgebildet sein kann, von einem Motor 5, der ebenfalls auf dem Fundament 3 angeordnet ist, angetrieben. Anstelle der Gelenkwelle kann jedoch der rotierende Körper auch über einen Riementrieb, der am Schaft des rotierenden Körpers 1 angreift und der andererseits mit einer Antriebsscheibe, die am Motor 5 angeordnet ist, angetrieben werden. Ebenso kann anstelle des Motors als Antrieb eine Turbine als Antrieb treten; genau wie bei beschaufeltem rotierenden Körper mittels Preßluftdüse die gegen die Schaufeln gerichtet ist der rotierende Körper angetrieben werden und durch Düsen, die entgegen der Wirkung der Antriebsdüsen wirken, zum Stillstand abgebremst werden. Wie bereits eingangs erwähnt, kann der rotierende Körper, beispielsweise ein Kraftfahrzeugrad, am einen Ende einer Wuchtspindel angeordnet sein, während am anderen Ende dieser Wuchtspindel eine Winkeleinteilung von 0 bis 360° angebracht ist und wobei die Wuchtspindel selbst über einen Riementrieb von einem Antriebsmotor angetrieben wird.

Mit dem Motor 5 ist eine Winkelteilung 6 verbunden und gleichzeitig über eine geeignete Wirkverbindung 7, die im einfachsten Falle aus einem Keilriemenantrieb besteht, ein Tachogenerator 8 verbunden, der zur Bestimmung der sich in der Beschleunigungsphase von Null bis zur Meßdrehzahl stets ändernden Geschwindigkeit eingesetzt ist. Die Winkelteilung 6 wird von einem Winkellagengeber 9 abgetastet, der Informationen über die auf eine Nullwinkellage bezogene Unwuchtwinkellage gibt und zwar in Abhängigkeit von nicht dargestellten Unwucht-Informationen messenden und in elektrische Spannungen umformende Schwingungsumformer.

Mit dem Einschalten des Motors 5 werden vom Tachogenerator 8 über eine Leitung 10 Spannungen, die der jeweiligen Drehzahl in der Beschleunigungsphase entsprechen, über einen Begrenzer 11, der gemäß Ausführungsbeispiel nur Spannungen durchläßt, die größer als 10 % der Meßdrehzahl des rotierenden Körpers 1 sind und die kleiner als 80 % der Meßdrehzahl sind auf eine Torschaltung 12 gegeben. Anstelle der Aufnahme des Beschleunigungsprofils von 10 % bis 80 % der Meßdrehzahl kann der Begrenzer 11 auch so geschaltet sein, daß ab Drehbeginn Spannungen durchgelassen werden und so lange der Torschaltung 12 zugeführt werden, bis der rotierende Körper seine Meßdrehzahl erreicht hat.

Der Torschaltung 12 werden gleichzeitig über eine Leitung 13 Informationen über den zurückgelegten Weg des rotierenden Körpers 1 zugeführt. Dies geschieht beispielsweise durch Abtasten eines Punktes auf der Winkelanzeige 6 oder wenn die Winkelanzeige 6 in 360° eingeteilt ist durch Abtasten aller Winkelgrade beispielsweise von Beginn der Drehung aus bis zum Erreichen der Meßdrehzahl. In dem oben gewählten Beispiel wird also in Abhängigkeit des Begrenzers 11 jedoch nur der zwischen der 10 %-igen und der 80 %-igen Nenndrehzahl zurückgelegte Weg auf eine Ausgangsleitung 14 als charakteristischer Wert durchgeschaltet. In einem Speicher 15 wird dieser charakteristische Wert gespeichert und im vorliegenden Falle der nur teilweisen Aufnahme der Beschleunigungsphase durch Multiplikation mit einem konstanten Wert in einem Multiplikator 16 in einen Steuerspeicher 17 weitergegeben, der für den Start der Bremsphase verantwortlich ist. Durch die Wahl nur eines Teils der Beschleunigungsphase wird die manchen Elektromotoren eigene asymptotische Annäherung an eine Enddrehzahl, die in diesem Falle gleich der Meßdrehzahl ist, als Einfluß auf die für die Beschleunigung charakteristische Zahl vermieden und eine größere Winkelge nauigkeit für das gezielte Anhalten des rotierenden Körpers erreicht. Anstelle der über die Leitung 13 vom Winkellagengeber 9 kommenden Informationen kann auch bei der erfindungsgemäßen Benutzung des Zeitintervalls für das anschließende zielgerechte Abbremsen über einen Taktgenerator 18 eine Serie von Impulsen fester Frequenz 19 über die Torschaltung 12 auf die Ausgangsleitung 14 als charakteristische Zahl durchgeschaltet werden.

Der Winkellagengeber 9 ist über eine weitere Leitung 20 mit einem die Unwuchtwinkellage darstellenden Meßgerät 21 verbunden, welches ein Anzeigegerät 22 in einfachster Ausgestaltung als Zeiger enthält. Nach Anzeige der Unwuchtwinkellage wird der Unwuchtmeßvorgang beendet und der Bremsvorgang über einen Schalter 23 eingeleitet. Anstelle der Anzeigeeinrichtung 22 kann gemäß der Erfindung auch ein Zeitschalter treten, der nach Ablauf einer vorbestimmten Zeit den Schalter 23 betätigt, um den Bremsvorgang einzuleiten. Durch Einleitung des Bremsvorgangs leitet ein Gatter 24 die Winkelinformationen des Meßgeräts 21 über die Leitung 25 und über eine Leitung 26 dem Steuerspeicher 17 zu. Durch Vergleich dieser Informationen mit der augenblicklichen Position des Rotors in einem Komperator 30 stellt dieser schließlich fest, wann die Information aus dem Steuerspeicher 17 minus augenblicklicher Position des Rotors zu Null geworden sind und leitet dann über den weiteren Eingang 29 einem Flip-Flop 27 und einem von diesem Flip-Flop 27 gesteuerten elektrischen Schalter 31 den Beginn des Bremsens des Motors 5 genau zu dem richtigen Zeitpunkt zu, so daß nach Ablauf der Verzögerungsphase der rotierende Körper mit der vorher durch Unwuchtmessung bestimmten Stelle an der Ausgleichseinrichtung so zur Ruhe kommt, daß sofort mit der Ausgleichsbearbeitung am rotierenden Körper begonnen werden kann.

Gemäß der Erfindung wird also in jeder Beschleunigungsphase von Antrieb und rotierendem Körper 1 jeweils erneut die für diesen Rotationskörper und den Antrieb charakteristische Zahl bestimmt. Damit wird es möglich, daß verschiedene rotierende Körper, die mit den Antrieben ein verschiedenes Massenträgheitsmoment oder eine verschiedene Reibung und weitere verschiedene Antriebseinflüsse besitzen mit derselben Sicherheit an einer gegebenenfalls durch die Unwuchtwinkellage vorbestimmten Stelle abgebremst werden können.

Die Erfindung ist ausdrücklich nicht auf Auswuchtmaschinen beschränkt, sie kann auch bei anderen Maschinen verwandt werden, bei denen das Anhalten an einer bestimmten Stelle gefordert wird z. B. Massenzentriermaschinen, Maschinen zur Messung von Exzentrizitäten, die an der "hohen" oder "tiefen" Stelle anhalten sollen oder bei Maschinen zur Messung der Gleichförmigkeit von Fahrzeugreifen (Uniformity).

**Patentansprüche**

1. Verfahren zum Stillsetzen an einem bestimmten Punkt des Umfangs eines von einem Antrieb in Drehung versetzten rotierenden Körpers am Ende eines Arbeitszyklus insbesondere eines in einer Auswuchtmaschine eingelagerten auf Unwucht zu untersuchenden rotierenden Körpers, dadurch gekennzeichnet, daß während mindestens eines Teils der Beschleunigungsphase die von einer unteren und einer oberen Drehzahl begrenzt wird, der zurückgelegte Hochlaufweg eines Punktes der Oberfläche des rotierenden Körpers relativ zu einem Festpunkt gemessen wird, daß nach Erreichen der Enddrehzahl (Meßdrehzahl) zum Anhalten des rotierenden Körpers an einer festzulegenden Position seines Umfangs relativ zu einem feststehenden Bauteil entsprechend dem zurückgelegten Hochlaufweg des Punktes während desselben Arbeitszyklus der Beginn und der Weg der Bremsphase bestimmt wird.

2. Verfahren nach Anspruch 1, dadurch gekennzeichnet, daß die am rotierenden Körper (1) festzulegende Sollposition des Stillstandes in Abhängigkeit von der während des selben Arbeitszyklus durchgeführten Unwuchtmessung geschieht.

3. Verfahren nach Anspruch 1 und Anspruch 2, dadurch gekennzeichnet, daß eine den nicht gemessenen Teil der Beschleunigungsphase berücksichtigende Konstante (16) dem Meßwert zugeführt wird.

4. Vorrichtung zur Durchführung des Verfahrens nach Anspruch 2 und/oder 3 zum Stillsetzen eines von einem Antrieb in Drehung versetzten rotierenden Körpers am Ende eines Arbeitszyklus, insbesondere eines in einer Auswuchtmaschine eingelagerten auf Unwucht zu untersuchenden rotierenden Körpers, dadurch gekennzeichnet, daß während der Beschleunigungsphase des rotierenden Körpers (1) eine Torschaltung (12) Winkelsignale vom Winkellagengeber (9) einem Steuerspeicher (17) zuführt und daß über einen von der Antriebsdrehzahl gesteuerten Schwellwertschalter (11) der Durchlassbereich der Torschaltung (12) gesteuert wird und daß der Beginn des Bremsvorgangs durch Vergleich in einen Komperator (30) des im Steuerspeicher (17) vorhandenen Winkelwerts mit dem im Unwuchtmeßgerät (22) vorhandenen Winkelwerts des Haltepunktes festgelegt wird und das Stillsetzen des mit dem Motor (5) gekoppelten rotierenden Körpers (1) in Abhängigkeit einer Torschaltung (27) über einen steuerbaren Schalter (31) geschieht.

5. Vorrichtung nach Anspruch 4, dadurch gekennzeichnet, daß ein Taktgenerator (18) vorgesehen ist.

6. Vorrichtung nach Anspruch 4 und/oder 5, dadurch gekennzeichnet, daß zwischen Speicher (15) und Steuerspeicher (17) ein Multiplikator (16) angeordnet ist.

## Claims

1. A method of stopping, at the end of a working cycle, at a specific point of the circumference of a rotating body set in rotation by a drive, particularly of a rotating body mounted in a balancing machine and to be examined for out-of-balance, characterised in that, during at least part of the acceleration phase, which is defined by a lower and an upper speed of rotation, the run-up distance travelled by a point of the surface of the rotating body relative to a fixed point is measured, and that, after the final speed (measuring speed) is reached, in order to stop the rotating body at a position of its circumference to be determined relative to a stationary structural member, the beginning and the distance of the braking phase are determined according to the run-up distance travelled by the point during the same working cycle.

2. A method according to claim 1, characterised in that the disired stopping position to be determined on the rotating body (1) is effected depending on the out-of-balance measurement carried out during the same working cycle.

3. A method according to claim 1 and claim 2, characterised in that a constant (16) allowing for the unmeasured part of the acceleration phase is added to the measured value.

4. An apparatus for carrying out the method according to claim 2 and/or 3 for stopping, at the end of a working cycle, a rotating body set in rotation by a drive, particularly a rotating body mounted in a balancing machine and to be examined for out-of-balance, characterised in that, during the acceleration phase of the rotating body (1), a gate circuit (12) supplies angle signals from the angular-position indicator (9) to a control store (17), and that the pass range of the gate circuit (12) is controlled via a threshold switch (11) controlled by the speed of rotation of the drive, and that the beginning of the braking operation is determined by comparison, in a comparator (30), of the angle value present in the control store (17) with the angle value of the stopping point present in the out-of-balance measuring device (22), and the stopping of the rotating body (1) coupled to the motor (5) is effected via a controllable switch (31) depending on a gate circuit (27).

5. An apparatus according to claim 4, characterised in that a timing-pulse generator (18) is provided.

6. An apparatus according to claim 4 and/or 5, characterised in that a multiplier (16) is disposed between store (15) and control store (17).

## Revendications

1. Procédé pour arrêter un objet tournant, mis en rotation par un dispositif d'entraînement, en un point déterminé de la périphérie à la fin d'un cycle de fonctionnement, en particulier un objet tournant dont on doit rechercher la présence d'un balourd, monté dans une machine d'équilibrage, caractérisé en ce que, pendant au moins une partie de la phase d'accélération qui est délimitée par une vitesse de rotation inférieure et une vitesse de rotation supérieure, on mesure le trajet d'accélération à pleine vitesse parcouru par un point de la surface de l'objet tournant par rapport à un point fixe, en ce qu'après l'atteinte de la vitesse de rotation finale (vitesse de rotation de mesure), pour arrêter l'objet tournant en une position à fixer de sa périphérie par rapport à un composant fixe, selon le trajet d'accélération à pleine vitesse parcouru par le point pendant le même cycle de fonctionnement, on détermine le début et le parcours de la phase de freinage.

2. Procédé selon la revendication 1, caractérisé en ce que la position prescrite de l'arrêt à établir sur l'objet tournant (1) est déterminée en fonction de la mesure de balourd effectuée pendant le même cycle de fonctionnement.

3. Procédé selon les revendications 1 et 2, caractérisé en ce qu'on ajoute à la valeur de mesure une constante (16) tenant compte de la partie non mesurée de la phase d'accélération.

4. Dispositif pour mettre en œuvre le procédé selon la revendication 2 et/ou la revendication 3 pour arrêter un objet tournant, mis en rotation par un dispositif d'entraînement, à la fin d'un cycle de fonctionnement, en particulier un objet tournant dont on doit examiner les défauts d'équilibrage, monté dans une machine d'équilibrage, caractérisé en ce que, pendant la phase d'accélération de l'objet tournant (1), un circuit ET (12) transmet des signaux angulaires du transmetteur de positions angulaires (9) à une mémoire de commande (17), et en ce que, par l'intermédiaire d'un interrupteur à seuil (11), commandé par la vitesse de rotation d'entraînement, la bande passante du circuit ET (12) est déterminée, et en ce que le début du freinage est fixé par comparaison dans un comparateur (30) de la valeur angulaire présente dans la mémoire de commande (17) avec la valeur angulaire du point d'arrêt présente dans l'appareil de mesure de balourd (22) et l'arrêt de l'objet tournant (1) accouplé au moteur (5) a lieu en fonction d'un circuit ET (27) par l'intermédiaire d'un interrupteur commandé (31).

5. Dispositif selon la revendication 4, caractérisé en ce qu'un générateur de rythme (18) est prévu.

6. Dispositif selon la revendication 4 et/ou la revendication 5, caractérisé en ce qu'un multiplicateur (16) est placé entre la mémoire (15) et la mémoire de commande (17).

Fig.1

EP 0 278 108 B1